# FASCICULE DE BREVET EUROPEEN

(11) **EP 0 814 987 B1**
(45) Date de publication et mention de la délivrance du brevet: **25.08.1999**
(21) Numéro de dépôt: 96904895.8
(22) Date de dépôt: 22.02.1996
(51) Int. Cl.: B60T 13/565, B60T 13/575

(54) **SERVOMOTEUR A PREREMPLISSAGE SANS LIMITATION DE DEBIT**
BREMSKRAFTVERSTÄRKER MIT VORFÜLLUNG OHNE DURCHFLUSSBEGRENZUNG
UNLIMITED-FLOW PREFILL BRAKE SERVO

(30) Priorité: 17.03.1995 FR 9503101
(43) Date de publication de la demande: 07.01.1998
(73) Titulaire: Bosch Systemes de Freinage, 93700 Drancy (FR)
(72) Inventeur: CASTEL, Philippe, F-75005 Paris (FR); MEYNIER, Guy, F-93600 Aulnay-sous-Bois (FR); NOLLEZ, Jacques, F-75009 Paris (FR)
(74) Mandataire: Bentz, Jean-Paul
(86) Numéro de dépôt international: FR9600283
(87) Numéro de publication internationale: WO9629221

(56) Documents cités:
- WO-A-94/07722
- DE-A- 4 005 586
- GB-A- 2 156 930

## Description

La présente invention concerne un dispositif de freinage assisté pour véhicule à moteur, comprenant: un maître-cylindre présentant au moins une chambre hydraulique primaire remplie d'un fluide de freinage et fermée par un piston hydraulique principal destiné à recevoir une force d'actionnement se composant d'une force d'entrée et d'une force d'assistance agissant toutes deux suivant une direction axiale; et un servomoteur pneumatique d'assistance propre à appliquer la force d'actionnement sur le piston hydraulique principal, en réponse à l'application de la force d'entrée sur une tige de commande contrôlant l'ouverture d'un clapet porté par un piston pneumatique mobile avec la tige de commande, le servomoteur comportant lui-même une enveloppe rigide séparée de façon étanche en deux chambres au moyen au moins d'une cloison mobile susceptible d'être sollicitée par une différence de pression sélectivement établie entre les deux chambres par l'ouverture du clapet, la force d'entrée étant transmise par l'intermédiaire d'un disque de réaction sur lequel s'appuie également le piston pneumatique pour lui fournir une première partie au moins de la force d'assistance, la cloison mobile étant montée coulissante sur le piston pneumatique, et le piston hydraulique principal du maître-cylindre comprenant un piston annulaire coulissant de façon étanche dans un alésage du maître-cylindre, et un piston interne coulissant de façon étanche à l'intérieur du piston annulaire.

Un dispositif de ce type est connu dans l'art antérieur au moins par le document FR-A-2 700 513.

Un tel dispositif de freinage présente l'avantage, résultant de l'utilisation d'une cloison mobile montée de manière à pouvoir coulisser par rapport au piston pneumatique jusqu'à venir en butée avec ce dernier, que l'effort de freinage croît de façon plus régulière, en fonction de la course de la tige de commande donc de la pédale de frein, que dans les dispositifs antérieurs.

Cependant, l'obtention d'un accroissement régulier de l'effort de freinage est encore perfectible dans les dispositifs de freinage de ce type, dans la mesure où l'instant d'entraînement du piston pneumatique par la paroi mobile dépend des conditions d'enfoncement de la pédale de frein et où la maîtrise des effets de l'entraînement du piston pneumatique par la paroi mobile suppose une optimisation délicate de plusieurs paramètres.

Le but de la présente invention est précisément de perfectionner ce dispositif connu pour permettre la réalisation aisée d'un dispositif de freinage assisté à réaction hydraulique propre à exercer un effort de freinage croissant sur la totalité de la course de la pédale de frein de façon très régulière.

A cette fin, le dispositif de la présente invention est essentiellement caractérisé en ce que le disque de réaction est en appui sur le piston annulaire, en ce que la cloison mobile est en appui sur le piston interne pour lui transmettre une seconde partie de la force d'assistance, en ce que le piston hydraulique principal comprend, outre le piston annulaire et le piston interne, un piston supplémentaire susceptible de recevoir du piston interne une poussée propre à le faire coulisser dans l'alésage, en ce que les pistons annulaire, interne et supplémentaire définissent ensemble, à l'intérieur de l'alésage, un volume annulaire variable qui se trouve relié à un circuit d'alimentation en liquide de freinage basse pression aussi longtemps que le piston annulaire n'a pas dépassé une position de déclenchement de freinage, et en ce que des moyens de communication sont prévus pour n' établir, entre le volume annulaire et la chambre hydraulique primaire, une communication permettant le passage de fluide de freinage, que lorsque le piston supplémentaire n'est écarté du piston annulaire que d'une distance au plus égale à une longueur de valeur prédéterminée.

Selon un premier mode de réalisation possible de l'invention, les moyens de communication comprennent une portée creuse solidaire du piston supplémentaire et tournée vers la chambre hydraulique primaire, un joint coulissant sur cette portée creuse entre une face d 'appui d'une collerette de diamètre d et une bague d'arrêt toutes deux solidaires de la portée, et une bague coulissante, coulissant dans l'alésage, dont une première extrémité est en appui sur le piston annulaire et dont une seconde extrémité de diamètre intérieur D supérieur au diamètre extérieur d de la collerette, est susceptible de venir en contact avec le joint au dela de la face d'appui de ladite collerette, ouvrant ainsi la dite communication lorsque le piston supplémentaire n'est séparé du piston annulaire que d'une distance au plus égale à ladite longueur de valeur prédéterminée .

Selon un second mode de réalisation possible de l'invention, les moyens de communication comprennent un passage réalisé dans le piston supplémentaire et portant un siège sélectivement obturé par un organe d'étanchéité commandé par un poussoir susceptible de prendre appui sur le piston annulaire pour libérer le siège lorsque le piston supplémentaire n'est séparé du piston annulaire que d'une distance au plus égale à ladite longueur de valeur prédéterminée .

Selon un troisième mode de réalisation possible de l'invention, les moyens de communication comprennent un passage constitué d'un orifice, ouvert dans la chambre hydraulique primaire, relié au circuit d'alimentation en liquide de freinage basse pression et découvert lorsque la distance entre cylindre mobile creux et piston hydraulique secondaire est au plus égale à ladite longueur de valeur prédéterminée .

Selon les différents modes de réalisation possibles de l'invention le piston interne et le piston supplémentaires sont réalisés en au moins deux éléments .

D'autres caractéristiques et avantages de l'invention ressortiront clairement de la description qui en est faite ci-après, à titre indicatif et nullement limitatif en référence aux dessins annexés, sur lesquels :
- la Figure 1 est une vue en coupe partielle d'un dispositif conforme à un premier mode de réalisation de l'invention, représenté dans sa position repos;
- la Figure 2 est une vue en coupe partielle du même dispositif, représenté dans un état de déclenchement de freinage;
- la Figure 3 est une vue agrandie d'un détail de la figure 1;
- la Figure 4 est une vue schématique partielle d'un dispositif conforme à un second mode de réalisation de l'invention;
- la Figure 5 est une vue schématique partielle d'un dispositif conforme à un troisième mode de réalisation de l'invention.
- la Figure 6 est une vue en coupe partielle d'un dispositif conforme à un quatrième mode de réalisation de l'invention, représenté dans sa position repos.

L'invention concerne de façon générale un perfectionnement apporté aux systèmes connus de freinage à assistance pneumatique, du type de ceux qui comprennent un servomoteur 1 et un maître-cylindre 2 .

De façon classique, le maître-cylindre 2 présente au moins une chambre hydraulique primaire 12 remplie d'un fluide de freinage et fermée par un piston hydraulique principal 11.

Ce maître-cylindre peut être actionné par l'application, sur le piston hydraulique 11, d'une force d'actionnement qui se compose en l'occurrence d'une force d'entrée et d'une force d'assistance agissant toutes deux suivant une direction axiale B.

Le servomoteur pneumatique d'assistance 1 a précisément pour fonction d'appliquer cette force d'actionnement sur le piston hydraulique principal, en réponse à l'application de la force d'entrée sur une tige de commande 8 qui contrôle l'ouverture d'un clapet pneumatique 7, ce clapet 7 étant porté par un piston pneumatique 5 mobile avec la tige de commande 8.

A cette fin, le servomoteur 1 comporte de façon connue une enveloppe rigide 3 séparée de façon étanche en deux chambres 3a, 3b au moyen au moins d'une cloison mobile 4 susceptible d'être sollicitée par une différence de pression sélectivement établie entre les deux chambres par l'ouverture du clapet 7.

Plus précisément, la chambre avant 3a, dont la face avant est fermée de façon étanche par le maître-cylindre 2, est en permanence raccordée à une source de dépression (non représentée) à travers une valve anti-retour 6, alors que la pression dans la chambre arrière 3b est controlée par le clapet 7, commandé par la tige de commande 8, laquelle est reliée à une pédale de frein (non représentée) .

La force d'entrée appliquée par la pédale de frein est transmise au piston hydraulique principal 11 par l'intermédiaire d'un disque de réaction 23, sur lequel s'appuie la tige de commande 8 par l'intermédiaire d'un plongeur 24, et sur lequel s'appuie également le piston pneumatique 5 pour communiquer à ce disque de réaction une première partie de la force d'assistance.

L'invention concerne en fait plus particulièrement un système de freinage dans lequel la cloison mobile 4 du servomoteur 1 est montée coulissante sur le piston pneumatique 5, et dans lequel le piston hydraulique principal 11 du maître-cylindre comprend d'une part un piston annulaire 13 coulissant de façon étanche dans un alésage 130 du maître-cylindre, et d'autre part un piston interne 14 coulissant de façon étanche à l'intérieur du piston annulaire, conformément à l'enseignement du document FR-A-2 700 513 précédemment mentionné.

Le fonctionnement du dispositif connu et décrit jusqu'à présent est le suivant.

Lorsque la tige de commande 8 est en position de repos, en l'occurrence tirée vers la droite, le clapet 7 établit normalement une communication entre les deux chammbres 3a et 3b du servomoteur, ou vient d'une position dans laquelle cette communication a été établie .

L'actionnement de la tige de commande 8 vers la gauche a pour effet, dans un premier temps, de déplacer le clapet 7 de façon qu'il isole l'une de l'autre les chambres 3a et 3b puis, dans un deuxième temps, de déplacer ce clapet de façon qu'il ouvre la chambre arrière 3b à la pression atmosphérique .

La différence de pression alors établie entre les deux chambres et appliquée à la cloison mobile 4 et au piston pneumatique 5, notamment par l'intermédiaire de la membrane 4a, fait apparaître une poussée qui constitue une force d'assistance, laquelle s'ajoute à l'effort de freinage exercé sur la tige de commande 8, ou 〈〈force d'entrée〉〉, pour constituer la force d'actionnement appliquée au piston hydraulique principal 11.

Selon l'invention, le disque de réaction 23 est en appui sur le piston annulaire 13 pour lui transmettre la force d'entrée en provenance du palpeur 24 et la première partie de la force d'assistance en provenance du piston 5, tandis que le piston interne 14 reçoit sur une première extrémité 14a, tournée vers la jupe 4b, la seconde partie de la force d'assistance en provenance de cette jupe, à travers la bague 20, et la transmet à un piston supplémentaire 10 par l'intermédiaire d'une seconde extrémité 14b, provoquant ainsi le coulissement du piston supplémentaire 10 dans l'alésage 130 du maître-cylindre.

Les pistons annulaire, interne et supplémentaire définissent ensemble à l'intérieur de l'alésage 130 du maître-cylindre un volume variable 15 en communication par l'orifice 501 avec le circuit d' alimentation en liquide de freinage basse pression 502.

Sous l' effet du déplacement des pistons interne et supplémentaire, le volume variable 15 croît et aspire le liquide de freinage du circuit 502, relié à un réservoir (non représenté).

Tant que le piston supplémentaire n'est écarté du piston annulaire que d'une distance au plus égale à une longueur de valeur prédéterminée, la chambre hydraulique primaire 12 et le volume 15 communiquent .

Au delà de cette distance, il y a fermeture de la communication et montée en pression de la chambre hydraulique primaire 12 jusqu'à ce que l'effet de la pression ainsi créée sur la section du piston supplémentaire 10 équilibre la seconde partie de la force d'assistance, provoquant l'arrêt du déplacement des pistons supplémentaire 10 et interne 14.

Un actionnement complémentaire de la tige de commande 8 suivant la direction axiale B, agit par l'intermédiaire du plongeur 24, du disque de réaction 23 et de la coupelle 25, sur le piston annulaire 13 qui dans son déplacement vient d'abord fermer l'orifice de réalimentation 501 isolant ainsi le volume variable 15, puis provoque la mise en pression du fluide contenu dans le volume variable 15 appliquant un effort complémentaire sur le piston supplémentaire 10 qui se déplace alors en même temps que le piston annulaire 13 et fait croître la pression de freinage dans la chambre hydraulique primaire 12.

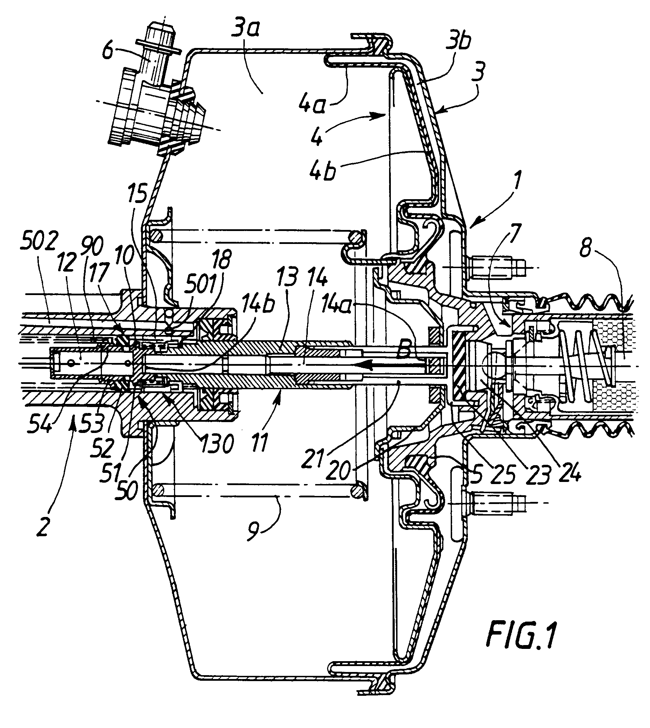

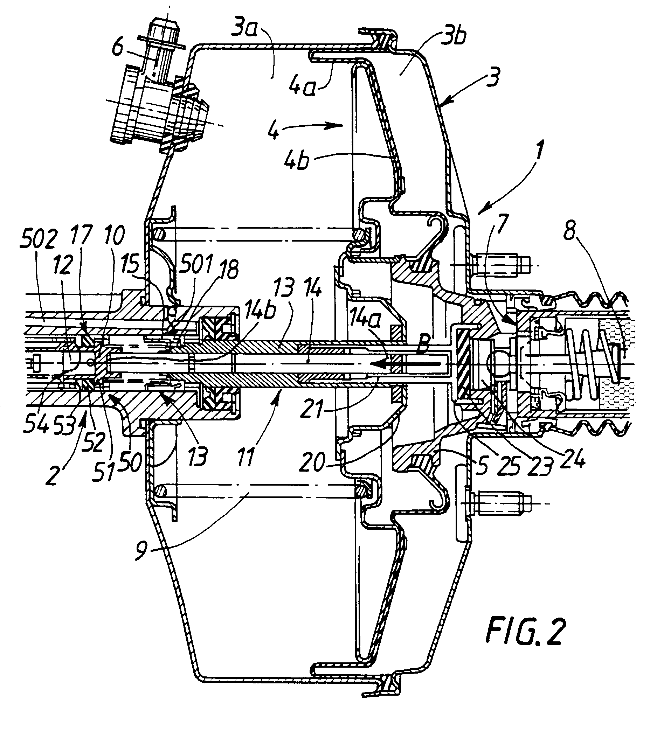

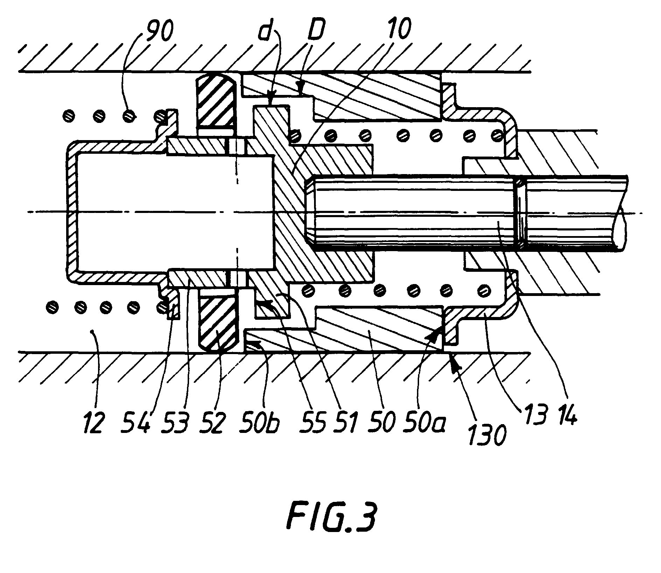

Selon un premier mode de réalisation illustré aux figures 1, 2 et 3, le piston supplémentaire 10 comprend une portée creuse 53, tournée vers la chambre hydraulique primaire 12, et portant une collerette 51 de diamètre extérieur d, comportant elle-même une face d'appui 55, et une bague d'arrêt 54 elle-même en appui contre l'extrémité du ressort de rappel 90, tandis qu'un joint 52 coulisse sur la portée creuse entre la face d'appui 55 de la collerette 51 et la bague d'arrêt 54.

Une bague coulissante 50 , coulissant dans l'alésage 130 présente deux extrémités dont la première 50a est en appui sur le piston annulaire 13 tandis que la seconde 50b de diamètre intérieur D supérieur au diamètre extérieur d de la collerette 51, est susceptible de venir en contact avec le joint 52 au delà de la face d'appui 55 de cette collerette .

Il en résulte que, aussi longtemps que le piston supplémentaire 10, repoussé par le ressort de rappel 90, est au repos, la bague coulissante 50 maintient le joint 52 écarté de la face d'appui 55, créant ainsi une communication entre la chambre hydraulique primaire 12 et le volume variable 15, alors que cette communication est interrompue dès que le joint 52 s'applique sur la face d'appui 55.

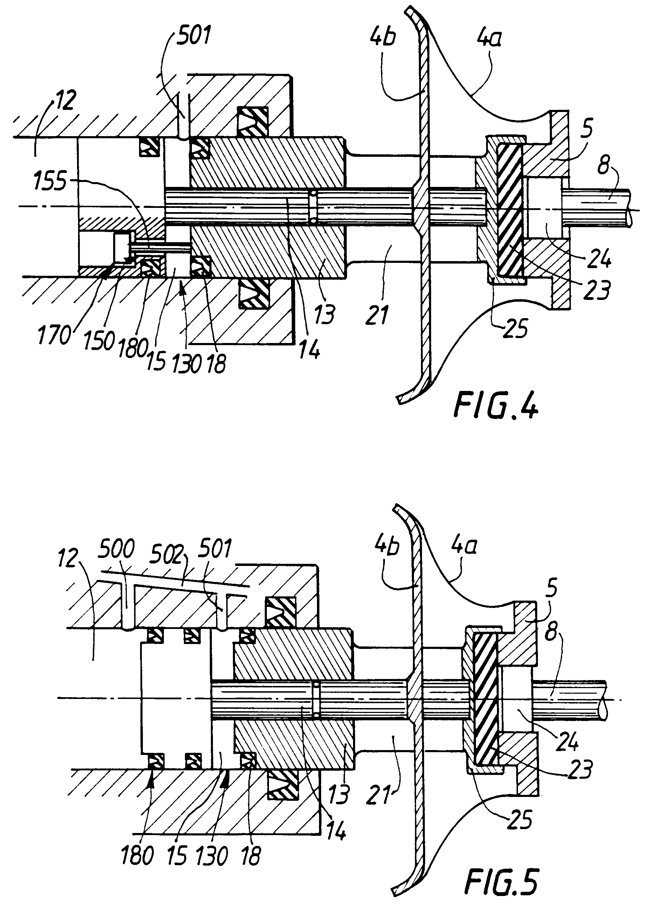

Selon un second mode de réalisation illustré à la figure 4, le piston supplémentaire 10 comprend un passage 170, réalisé parallèlement à l'axe de déplacement du piston, et portant un siège 150 sélectivement obturé par un clapet, ce clapet étant commandé par un poussoir 155 susceptible de prendre appui sur le piston annulaire 13.

Il en résulte, lorsque le piston supplémentaire 10 est au repos, que le poussoir 155 libère le siège et assure la communication entre la chambre hydraulique primaire 12 et le volume variable 15.

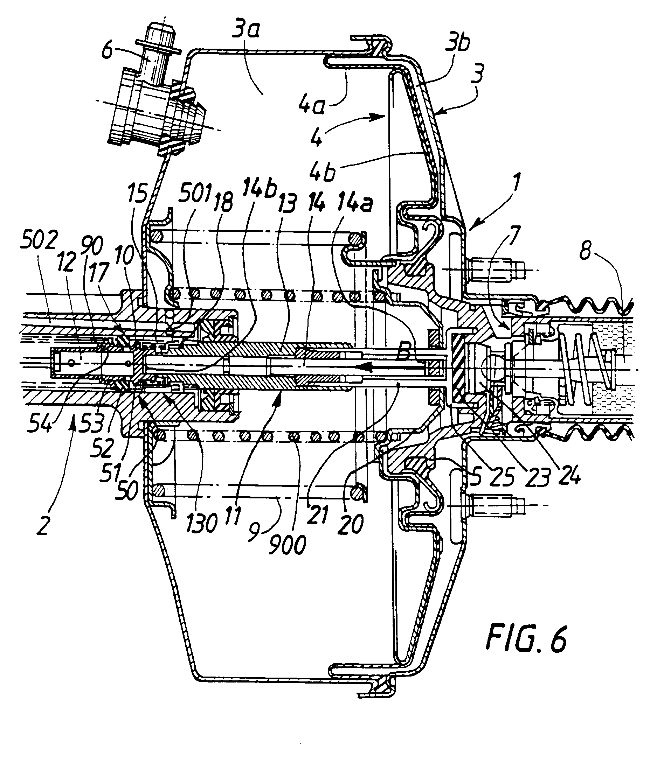

Selon un troisième mode de réalisation illustré à la figure 5, le moyen de communication comprend un orifice 500, ouvert dans la chambre hydraulique primaire 12 et relié au circuit d'alimentation en liquide de freinage basse pression 502, donc à l'orifice 501, lui-même en communication avec le volume variable 15.

Il en résulte, lorsque le piston supplémentaire 10 est au repos, que la chambre hydraulique primaire 12 est en communication avec le volume variable 15.

Cette communication se trouve interrompue lors du déplacement du piston hydraulique secondaire 14 dés que la distance entre le cylindre mobile creux 13 et le piston hydraulique secondaire 14 est au plus égale à ladite longueur de valeur prédéterminée .

Une variante commune à tous les modes de réalisation permet d'envisager le piston intérieur 14 et le piston supplémentaire 10 réalisés en au moins deux éléments.

Selon un quatrième mode de réalisation illustré à la figure 6, le piston 11 est ramené en position de repos, par le ressort 900 permettant lors de l'enfoncement de la tige de commade 8 une meilleure maîtrise des effets de l'entraînement du piston pneumatique 5 par la cloison mobile 4.

## Revendications

1. Dispositif de freinage assisté pour véhicule à moteur, comprenant: un maître-cylindre (2) présentant au moins une chambre hydraulique primaire (12) remplie d'un fluide de freinage et fermée par un piston hydraulique principal (11) destiné à recevoir une force d'actionnement se composant d'une force d'entrée et d'une force d'assistance agissant toutes deux suivant une direction axiale; et un servomoteur pneumatique d'assistance (1) propre à appliquer la force d'actionnement sur le piston hydraulique principal, en réponse à l'application de la force d'entrée sur une tige de commande (8) contrôlant l'ouverture d'un clapet (7) porté par un piston pneumatique (5) mobile avec la tige de commande, le servomoteur comportant lui-même une enveloppe rigide (3) séparée de façon étanche en deux chambres (3a, 3b) au moyen au moins d'une cloison mobile (4) susceptible d'être sollicitée par une différence de pression sélectivement établie entre les deux chambres par l'ouverture du clapet, la force d'entrée étant transmise par l'intermédiaire d'un disque de réaction (23) sur lequel s'appuie également le piston pneumatique pour lui fournir une première partie au moins de la force d'assistance, la cloison mobile (4) étant montée coulissante sur le piston pneumatique (5), et le piston hydraulique principal du maître-cylindre (11) comprenant un piston annulaire (13) coulissant de façon étanche dans un alésage (130) du maître-cylindre, et un piston interne (14) coulissant de façon étanche à l'intérieur du piston annulaire, caractérisé en ce que le disque de réaction (23) est en appui sur le piston annulaire (13), en ce que la cloison mobile (4) est en appui sur le piston interne (14) pour lui transmettre une seconde partie de la force d'assistance, en ce que le piston hydraulique principal (11) comprend, outre le piston annulaire (13) et le piston interne (14), un piston supplémentaire (10) susceptible de recevoir du piston interne une poussée propre à le faire coulisser dans l'alésage (130), en ce que les pistons annulaire, interne et supplémentaire définissent ensemble, à l'intérieur de l'alésage (130), un volume annulaire variable (15) qui se trouve relié à un circuit d'alimentation en liquide de freinage basse pression (502) aussi longtemps que le piston annulaire n'a pas dépassé une position de déclenchement de freinage, et en ce que des moyens de communication sont prévus pour n'établir, entre le volume annulaire (15) et la chambre hydraulique primaire (12), une communication permettant le passage de fluide de freinage, qu ' à la condition au moins que le piston supplémentaire (10) ne soit écarté du piston annulaire que d'une distance au plus égale à une longueur de valeur prédéterminée.

2. Dispositif de freinage suivant la revendication 1, caractérisé en ce que les moyens de communication comprennent :
- une portée creuse (53) solidaire du piston supplémentaire (10) et tournée vers la chambre hydraulique primaire (12),
- un joint (52) coulissant sur cette portée creuse entre une face d 'appui 55 d ' une collerette (51) de diamètre extérieur (d) et une bague d'arrêt (54), toutes deux solidaires de la portée (53), et
- une bague coulissante (50), coulissant dans l'alésage (130 ), dont une première extrémité 50a est en appui sur le piston annulaire et dont une seconde extrémité 50b de diamètre intérieur (D), supérieur au diamètre extérieur (d) de la collerette (51), est susceptible de venir en contact avec le joint (52) au delà de la face d'appui (55) de ladite collerette ouvrant ainsi ladite communication lorsque le piston supplémentaire n'est séparé du piston annulaire que d'une distance au plus égale à ladite longueur de valeur prédéterminée .

3. Dispositif de freinage suivant la revendication 1, caractérisé en ce que les moyens de communication comprennent un passage (170) réalisé dans le piston supplémentaire (10) et portant un siège (150) sélectivement obturé par un organe d'étanchéité commandé par un poussoir (155) susceptible de prendre appui sur le piston annulaire (13) pour libérer le siège lorsque le piston supplémentaire (10) n'est séparé du piston annulaire (13) que d'une distance au plus égale à ladite longueur de valeur prédéterminée .

4. Dispositif de freinage suivant revendication 1, caractérisé en ce que les moyens de communication comprennent un passage constitué d'un orifice (500), ouvert dans la chambre hydraulique primaire (12), relié au circuit d'alimentation en liquide de freinage basse pression (502) et découvert lorsque la distance entre cylindre mobile creux (13) et piston hydraulique secondaire (14) est au plus égale à ladite longueur de valeur prédéterminée .

5. Dispositif de freinage suivant les revendications précédentes caractérisé en ce que le piston interne et le piston supplémentaire sont réalisés en au moins deux éléments .

## Claims

1. Boosted braking device for a motor vehicle, comprising: a master cylinder (2) exhibiting at least one primary hydraulic chamber (12) filled with a brake fluid and closed by a main hydraulic piston (11) designed to receive an actuating force composed of an input force and of a boost force both acting in an axial direction; and a pneumatic booster (1) capable of applying the actuating force to the main hydraulic piston, in response to the application of the input force on an operating rod (8) controlling the opening of a valve (7) borne by a pneumatic piston (5) which can move with the operating rod, the booster itself including a rigid casing (3) divided in leaktight fashion into two chambers (3a, 3b) by means at least of a moving partition (4) which can be urged by a pressure difference established selectively between the two chambers through the opening of the valve, the input force being transmitted via a reaction disk (23) against which the pneumatic piston also bears in order to supply it with a first part at least of the boost force, the moving partition (4) being slidably mounted on the pneumatic piston (5), and the main hydraulic piston of the master cylinder (11) comprising an annular piston (13) sliding in leaktight fashion in a bore (130) of the master cylinder, and an internal piston (14) sliding in leaktight fashion inside the annular piston, characterized in that the reaction disk (23) bears against the annular piston (13), in that the moving partition (4) bears against the internal piston (14) in order to transmit a second part of the boost force thereto, in that the main hydraulic piston (11) comprises, apart from the annular piston (13) and the internal piston (14), an additional piston (10) capable of receiving from the internal piston a thrust able to make it slide in the bore (130), in that the annular, internal and additional pistons together define, inside the bore (130), a variable annular volume (15) which is connected to a low-pressure brake fluid supply circuit (502) for as long as the annular piston has not gone beyond a position where braking is initiated, and in that communication means are provided to establish, between the annular volume (15) and the primary hydraulic chamber (12), a communication allowing the passage of brake fluid only provided at least that the additional piston (10) is distant from the annular piston merely by a distance not exceeding a length of predetermined magnitude.

2. Brake device according to Claim 1, characterized in that the communication means comprise:
- a hollow bearing surface (53) integral with the additional piston (10) and pointing towards the primary hydraulic chamber (12),
- a seal (52) sliding over this hollow bearing surface between a bearing face 55 of a collar (51) of outside diameter (d) and a stop ring (54), both integral with the bearing surface (53), and
- a sliding ring (50) sliding in the bore (130), and of which a first end 50a bears against the annular piston and a second end 50b of inside diameter (D), greater than the outside diameter (d) of the collar (51), can come into contact with the seal (52) beyond the bearing face (55) of the said collar, thus opening up the said communication when the additional piston is separated from the annular piston merely by a distance not exceeding the said length of predetermined magnitude.

3. Brake device according to Claim 1, characterized in that the communication means comprise a passage (170) made in the additional piston (10) and bearing a seat (150) selectively closed off by a sealing member operated by a push-rod (155) capable of bearing against the annular piston (13) in order to free the seat when the additional piston (10) is separated from the annular piston (13) merely by a distance not exceeding the said length of predetermined magnitude.

4. Brake device according to Claim 1, characterized in that the communication means comprise a passage consisting of an orifice (500) open into the primary hydraulic chamber (12), connected to the low-pressure brake fluid supply circuit (502) and uncovered when the distance between hollow moving cylinder (13) and secondary hydraulic piston (14) does not exceed the said length of predetermined magnitude.

5. Brake device according to one of the preceding claims, characterized in that the internal piston and the additional piston are made of at least two elements.

## Patentansprüche

1. Vorrichtung zur Bremskraftverstärkung für Motorfahrzeuge, enthaltend: einen Hauptzylinder (2), der mindestens eine erste Hydraulikkammer (12) aufweist, die mit einer Bremsflüssigkeit gefüllt und durch einen hydraulischen Hauptkolben (11) abgeschlossen ist, der dazu bestimmt ist, eine Betätigungskraft aufzunehmen, die sich aus einer Eingangskraft und einer Unterstützungskraft zusammensetzt, die alle beide entlang einer axialen Richtung wirken; und einen unterstützenden pneumatischen Servomotor (1), der dazu geeignet ist, die Betätigungskraft auf den hydraulischen Hauptkolben in Reaktion auf die Aufbringung der Eingangskraft auf eine Steuerstange (8) auszuüben, die das Öffnen eines Ventilelements (7), das von einem mit der Steuerstange beweglichen pneumatischen Kolben (5) getragen wird, kontrolliert, wobei der Servomotor selbst eine starre Hülle (3) aufweist, die auf dichte Weise in zwei Kammern (3a, 3b) durch wenigstens eine bewegliche Trennwand (4) getrennt ist, die durch eine selektiv durch das Öffnen des Ventilelements erzeugte Druckdifferenz zwischen den beiden Kammern beaufschlagt werden kann, wobei die Eingangskraft über eine Reaktionsscheibe (23) übertragen wird, an der ebenfalls der hydraulische Kolben anliegt, um ihr wenigstens einen ersten Teil der Unterstützungskraft zu liefern, wobei die bewegliche Trennwand (4) gleitend auf dem pneumatischen Kolben (5) befestigt ist und wobei der hydraulische Hauptkolben (11) des Hauptzylinders einen ringförmigen Kolben (13) enthält, der in dichter Weise in einer Bohrung (130) des Hauptzylinders gleitet, und einen inneren Kolben (14), der in dichter Weise im Inneren des ringförmigen Kolbens gleitet, dadurch gekennzeichnet, daß die Reaktionsscheibe (23) sich in Anlage am ringförmigen Kolben (13) befindet, daß die bewegliche Trennwand (4) sich in Anlage am inneren Kolben (14) befindet, um ihm einen zweiten Teil der Unterstützungskraft zu übertragen, daß der hydraulische Hauptkolben (11) zusätzlich zum ringförmigen Kolben (13) und dem inneren Kolben (14) einen zusätzlichen Kolben (10) enthält, der vom inneren Kolben eine Schubkraft empfangen kann, die dazu geeignet ist, diesen in der Bohrung (130) gleiten zu lassen, daß der ringförmige, der innere und der zusätzliche Kolben zusammen im Inneren der Bohrung (130) ein ringförmiges, variables Volumen (15) definieren, das mit einem Versorgungskreis für Bremsflüssigkeit unter niedrigem Druck (502) in Verbindung steht, wenn der ringförmige Kolben nicht eine Position des Auslösens des Bremsvorgangs überschritten hat, und daß Verbindungsmittel vorgesehen sind, um nur unter der Bedingung, daß wenigstens der zusätzliche Kolben (10) nicht weiter vom ringförmigen Kolben getrennt ist als um eine Entfernung, die höchstens einer Länge von vorbestimmtem Wert entspricht, zwischen dem ringförmigen Volumen (15) und der ersten Hydraulikkammer (12) eine Verbindung herzustellen, die den Durchlaß von Bremsflüssigkeit erlaubt.

2. Bremsvorrichtung nach Anspruch 1, dadurch gekennzeichnet, daß die Verbindungsmittel enthalten:
- einen hohlen Ansatz (53), der fest mit dem zusätzlichen Kolben (10) verbunden und zur ersten Hydraulikkammer (12) gerichtet ist,
- eine Dichtung (52), die auf diesem hohlen Ansatz zwischen einer Anlagefläche (55) eines Bundes (51) mit äußerem Durchmesser (d) und einem Stellring (54) gleitet, die beide fest mit dem Ansatz (53) verbunden sind und
- einen Gleitring (50), der in der Bohrung (130) gleitet, dessen eines Ende (50a) sich in Anlage am ringförmigen Kolben befindet und dessen zweites Ende (50b) mit einem innerem Durchmesser (D), der größer ist als der äußere Durchmesser (d) des Bundes (51), mit der Dichtung (52) jenseits der Anlagefläche (55) des besagten Bundes in Kontakt kommen kann, um so die besagte Verbindung zu öffnen, wenn der zusätzliche Kolben um nicht mehr als eine Entfernung, die höchstens der besagten Länge von vorbestimmtem Wert entspricht, vom ringförmigen Kolben getrennt ist.

3. Bremsvorrichtung nach Anspruch 1, dadurch gekennzeichnet, daß die Verbindungsmittel einen im zusätzlichen Kolben (10) ausgeführten Durchgang (170) enthalten, der einen Sitz (150) aufweist, der selektiv durch ein von einem Stößel gesteuertes Dichtungsmittel verschlossen wird, wobei der Stößel an dem ringförmigen Kolben (13) anliegen kann, um den Sitz freizugeben, wenn der zusätzliche Kolben (10) um nicht mehr als eine Entfernung, die höchstens der besagten Länge von vorbestimmtem Wert entspricht, vom ringförmigen Kolben (13) getrennt ist.

4. Bremsvorrichtung nach Anspruch 1, dadurch gekennzeichnet, daß die Verbindungsmittel einen aus einer Öffnung (500) bestehenden Durchgang aufweisen, der zur ersten Hydraulikkammer (12) geöffnet ist, mit dem Versorgungskreis für Bremsflüssigkeit unter niedrigem Druck (502) verbunden ist und freigelegt ist, wenn die Entfernung zwischen dem beweglichen hohlen Zylinder (13) und dem zweiten Hydraulikkolben (14) höchstens der besagter Läge von vorbestimmtem Wert entspricht.

5. Bremsvorrichtung nach den vorstehenden Ansprüchen, dadurch gekennzeichnet, daß der innere Kolben und der zusätzliche Kolben aus wenigstens zwei Elementen bestehen.
